# EUROPEAN PATENT APPLICATION

(11) **EP 1 150 232 A2**
(43) Date of publication of application: **31.10.2001**
(21) Application number: 01110449.4
(22) Date of filing: 27.04.2001
(51) Int. Cl.: G06F 17/60

(54) **System and method for merger and acquisition proposal generation**

(30) Priority: 28.04.2000 JP 2000129065
(71) Applicant: NEC CORPORATION, Tokyo (JP)
(72) Inventor: Kinoshita, Haruhiko, c/o Nec Corp., Tokyo (JP)
(74) Representative: Betten & Resch

(57) **Abstract**

In a merger and acquisition proposal generation system in which a merger and acquisition brokering business entity, one or more candidate enterprises desiring the generation of a merger and acquisition proposal, and an application service provider are mutually electrically connected via a communication network, business information indicating general business activities, such as financial, accounting, and tax information is stored individually with regard to each candidate enterprise at the application service provider, this system having a function whereby the merger and acquisition brokering business entity obtains required information with regard to candidate enterprises, and generates a merger and acquisition proposal with respect to each of the candidate enterprise.

## Description

### BACKGROUND OF THE INVENTION

### 1. Field of the Invention

The present invention relates to a system and method for generating a merger and acquisition proposal, and more particularly to a system and method for generating a merger and acquisition proposal whereby a merger and acquisition brokering business entity is capable of providing a merger and acquisition proposal to a specific candidate enterprise via a communication network.

### 2. Related Art

In the past, in the case in which a company, a group or other merger and acquisition brokering business entity prepares a merger and acquisition proposal and provides the merger and acquisition proposal to a plurality of candidate businesses, the merger and acquisition brokering business entity themselves must use some type of computer network, documents, or the telephone and the like to obtain required with regard to a specific candidate enterprise, or purchase disclosure documents that a specific candidate enterprise issues at a specific time, such as a stock report, a financial report, an accounting report, or a tax report or the like, in order to obtain the required information, or else a worker from the merger and acquisition brokering business entity visits a specific candidate enterprise to obtain the required information, and, based on a company report with regard to the specific candidate enterprise, a merger and acquisition proposal is generated.

In the above-noted information collection method, however, the information available for use as a reference by the merger and acquisition brokering business entity in generating a trial proposal regarding merger and acquisition is limited to information that the merger and acquisition candidate enterprise has made public, and information disclosed to the merger and acquisition brokering business entity by the specific candidate enterprise concerned.

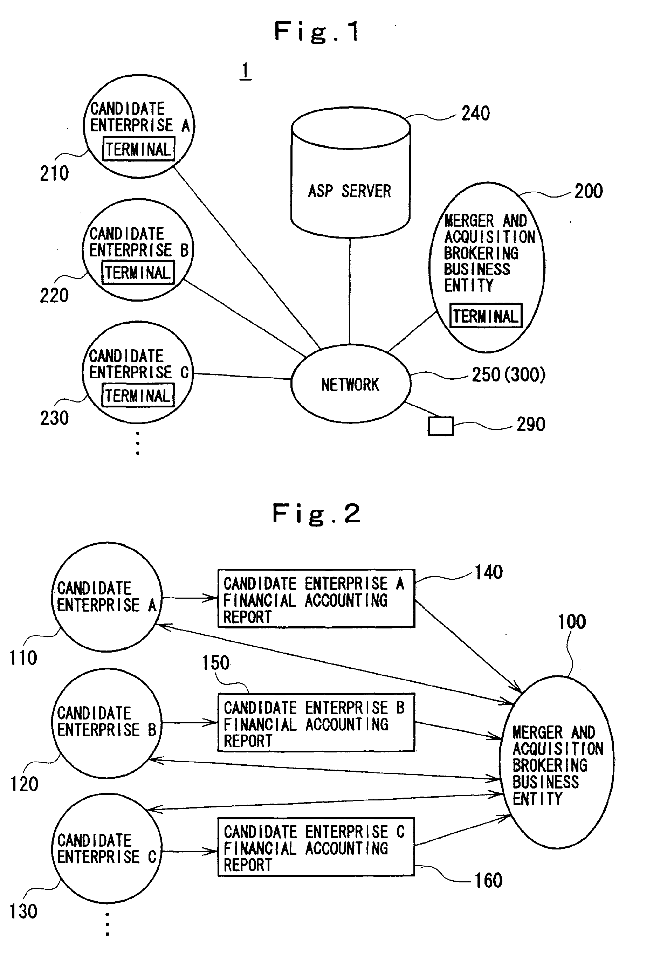

Fig. 2 of the accompanying drawings is a block diagram illustrating the general method in the case of generating a merger and acquisition proposal based on information obtained by a merger and acquisition brokering business entity from a specific candidate enterprise in the past. As is clear from this drawing, in order for a merger and acquisition brokering business entity 100 to analyze business activity information of a candidate enterprise A 110, a candidate enterprise B 120, and a candidate enterprise C 130 and generate a merger and acquisition proposal, the merger and acquisition brokering business entity collects information such as a financial accounting report already issued by the candidate enterprise A 110, a financial accounting report 150 already issued by the candidate enterprise B 120, a financial accounting report 160 already issued by the candidate enterprise C 130, responses to direct questions posed to the candidate enterprise A 110 during a visit thereto, response to direct questions posed to the candidate enterprise B 120 on a visit thereto, and responses to direct questions posed to the candidate enterprise C 130 on a visit thereto.

Of the above, the financial accounting report 140 of the candidate enterprise A 110 is produced with the cooperation of an accounting firm commissioned by the candidate enterprise A 110, and is a report that has been made public. Similarly, the financial accounting report 150 of the candidate enterprise B 120 is produced with the cooperation of an accounting firm commission by the candidate enterprise B 120, and is a report that has been made public, and the financial accounting report 160 of the candidate enterprise C 130 is produced with the cooperation of an accounting firm commissioned by the candidate enterprise C 130, and is a report that has been made public.

The financial accounting report 140 of the candidate enterprise A 110, the financial accounting report 150 of the candidate enterprise B 120, and the financial accounting report 160 of the candidate enterprise C 130 are all generated and publicized at the end of each fiscal period, these being generated once each year, or twice each year, once for the first half, and once for the second half of the fiscal period.

An example of the financial accounting reports 140, 150, and 160 of the candidate enterprises A 110, B 120, and C 130, respectively, that can be easily obtained by the merger and acquisition brokering business entity 100 as specific materials is the stock report (required, for example, by the Japanese government).

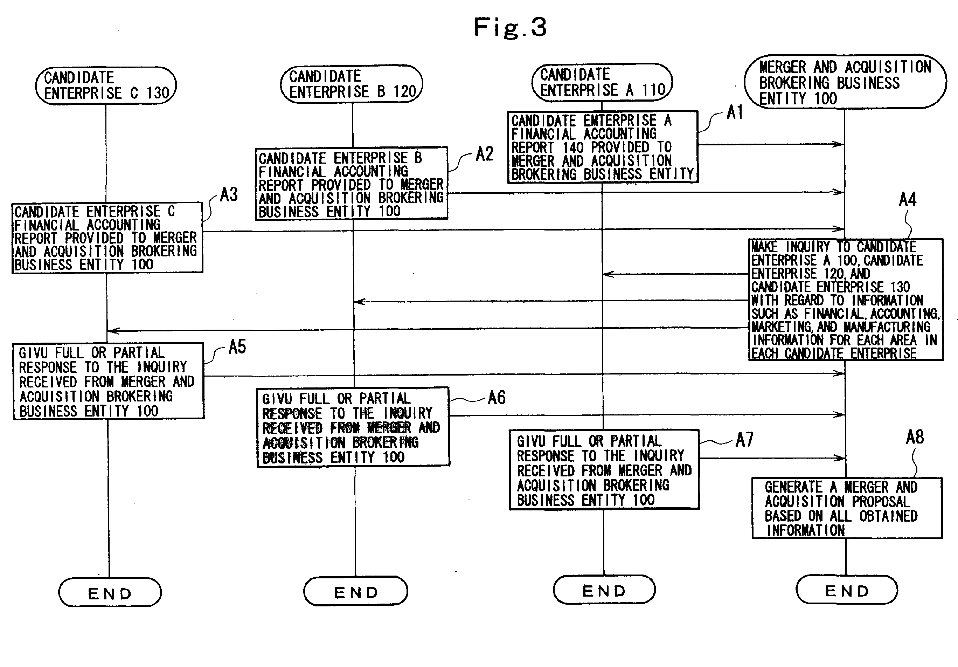

In the method of the past, as a procedure for generating the merger and acquisition proposal, as is clear from the flowchart of Fig. 3 of the accompanying drawings, the candidate enterprise A 110 first, for example, publicly discloses its financial accounting report, thereby providing it to the merger and acquisition brokering business entity 100 (step A1).

In the same manner, the candidate enterprise B 120 for example publicly discloses its financial accounting report, thereby providing it to the merger and acquisition brokering business entity 100 (step A2).

Additionally, the candidate enterprise C 130 for example publicly discloses its financial accounting report, thereby providing it to the merger and acquisition brokering business entity 100 (step A3).

The merger and acquisition brokering business entity 100 receives the contents of the financial accounting reports 140, 150 and 160 of the candidate enterprise A 110, candidate enterprise B 120, and candidate enterprise C 130, respectively, and in order to achieve the generation of an effective merger and acquisition proposal, asks each of the candidate enterprises A 110, B 120, and C 130 for further specific and detailed financial, accounting, marketing, manufacturing and other business activity information for each division of each candidate enterprise (step A4).

After the above, the candidate enterprise A 110 provides a full or partial response to the inquiry from the merger and acquisition brokering business entity 100 (step A5).

Similarly, the candidate enterprise B 120 also provides a full or partial response to the inquiry from the merger and acquisition brokering business entity 100 (step A6), and the candidate enterprise C 130 also provides a full or partial response to the inquiry from the merger and acquisition brokering business entity 100 (step A7).

Finally, the merger and acquisition brokering business entity 100 uses all the information obtained from the above-noted steps A1 through A7 and other information available from the market to generate a merger and acquisition proposal (step A8).

In the merger and acquisition proposal generation method of the past, however, the information that can be referenced by the merger and acquisition brokering business entity when the merger and acquisition proposal is generated is limited to the information provided by a candidate enterprise in response to questions from the merger and acquisition brokering business entity, publicly available information, and information available from the market.

Thus, although the merger and acquisition brokering business entity, which wishes to actually obtain an agreement from relevant persons at a candidate enterprise, desires to obtain diverse information for making a multifaceted analysis of the candidate enterprise utilizing, for example,
detailed fiscal period business activity information for each one of divisions of the enterprise, respectively, or the enterprise's expected order inflow, it was not possible to satisfy this desire, and there was not a good method of verifying the truthfulness of the responses given to the merger and acquisition brokering business entity by a candidate enterprise.

Accordingly, it is an object of the present invention to improve on the above-noted drawbacks in the prior art, by providing a merger and acquisition proposal generation system and method, whereby a merger and acquisition brokering business entity can obtain the required broad-ranging information regarding each candidate enterprise, which was not available in the past, this information being used as a reference for generating a merger and acquisition proposal, so as to provide a more feasible merger and acquisition proposal.

### SUMMARY OF THE INVENTION

To achieve the above-noted objects, the present invention adopts the following basic technical constitution.

Specifically, a first aspect of the present invention is a merger and acquisition proposal generation system, wherein a merger and acquisition brokering business entity, one or a plurality of candidate enterprises having a prescribed contractual relationship with the merger and acquisition brokering business entity and desiring the generation of a merger and acquisition proposal, and an application service provider (ASP) are mutually connected via an appropriate communication network, and wherein the system is configured so that business information indicating general business activities, including at least financial, accounting, and tax information for each candidate enterprise is stored at the ASP separately for each candidate enterprise, and the merger and acquisition brokering business entity having a function whereby the merger and acquisition brokering business entity obtains required information with regard to a candidate enterprise in the above-noted contractual relationship desiring the generation of a merger and acquisition proposal from the ASP and generates a merger and acquisition proposal for each candidate enterprise.

A second aspect of the present invention is a method for generating a merger and acquisition proposal, wherein a merger and acquisition brokering business entity which business is to make and provide a merger and acquisition proposal to candidate enterprises, one or a plurality of candidate enterprises having a prescribed contractual relationship with the merger and acquisition brokering business entity and desiring generation of a merger and acquisition proposal, and an application service provider are mutually connected via an appropriate communication network, the method comprising:
a step of each the candidate enterprise minimally transferring to the application service provider at an appropriate interval, business information indicating general business activities, including financial, accounting, and tax information of the candidate enterprise via a terminal thereof, so that a condition in which the latest business information indicating general business activities of the candidate enterprise, is at all time updated and stored within the application service provider for each the candidate enterprise, is maintained;
a step of the candidate enterprise viewing or downloading its own business information from the ASP via a terminal of the candidate enterprise at any time,
a step of the merger and acquisition brokering business entity accessing the ASP and viewing or downloading via a terminal of the merger and acquisition brokering business entity all or part of the information stored at the ASP regarding a candidate enterprise desiring the generation of a merger and acquisition proposal,
a step of the merger and acquisition brokering business entity considering the information viewed or downloaded regarding the candidate enterprise and generating a proposal for a merger and acquisition between a plurality of specific candidate enterprises, and
a step of the merger and acquisition brokering business entity notifying the candidate enterprises of the generated merger and acquisition proposal.

By adopting the above-noted technical constitution, a system and method for generating a merger and acquisition proposal according to the present invention, in generating a proposal for a partial or total merger or acquisition between a plurality of enterprises, make particular use of a network such as the Internet as a medium via which to accumulate information about the activities of candidate enterprise, this information being referenced by a merger and acquisition brokering business entity, thereby enabling the generation of a proposal for a highly feasible partial or total merger or acquisition between candidate enterprises.

Additionally, the present invention enables each candidate enterprise to consign the storage and management of information regarding its own finances, accounting, business, and manufacturing and the like to an ASP, and further enables the merger and acquisition brokering business entity to select from information stored at the ASP with regard to business information about various activities of a large number of candidates enterprises, without disclosing this information publicly, something that was not possible in the past, thereby enabling the generation of a proposal with a high feasibility.

### BRIEF DESCRIPTION OF THE DRAWING

Fig. 1 is a block diagram showing the configuration of an embodiment of a merger and acquisition proposal generation system according to the present invention.

Fig. 2 is a block diagram showing the configuration of a merger and acquisition proposal generation system in the past.

Fig. 3 is a flowchart illustrating the general operating procedure in a merger and acquisition proposal generation method of the past.

Fig. 4 is a flowchart illustrating the general operating procedure in a merger and acquisition proposal generation method according to the present invention.

Fig. 5 is a flowchart illustrating the general operating procedure in another embodiment of a merger and acquisition proposal generation method according to the present invention.

### DETAILED DESCRIPTION OF THE PREFERRED EMBODIMENTS

Embodiments of a merger and acquisition proposal generation system and method according to the present invention are described in detail below, with references made to relevant accompanying drawings.

Specifically, Fig. 1 is a block diagram showing the configuration of an embodiment of a merger and acquisition proposal generation system according to the present invention. This drawing shows a merger and acquisition proposal generation system 1, in which a merger and acquisition brokering business entity 200, one or a plurality of candidate enterprise 210, 220, 230 and so on, having a prescribed contractual relationship with the merger and acquisition brokering business entity 200 and desiring the generation of a merger and acquisition proposal, and an application service provider (ASP) 240 are mutually electrically connected via an appropriate communication network 250, and business information indicating general business activities, including at least financial, accounting, and tax information for each candidate enterprise is stored at the ASP separately for each of the candidate enterprises, this system having a function whereby the merger and acquisition brokering business entity 200 obtains required information with regard to candidate enterprises 210, 220, and 230 in the above-noted contractual relationship desiring the generation of a merger and acquisition proposal from the ASP and generates a merger and acquisition proposal for each candidate enterprise 210, 220, and 230.

It is desirable that the operation of each candidate enterprise 210, 220, 230, and so on storing business information indicating general business activities of each candidate enterprise at the ASP 240 and the operation of the merger and acquisition brokering business entity generating a merger and acquisition proposal with respect to the candidate enterprises 210, 220, 230, and so on be performed as processing by a computer.

It is also preferable in the present invention that the communication network 250 be the Internet.

The ASP 240 used in the present invention can be under the control of the merger and acquisition brokering business entity 200, and can alternately be, rather than under the control of the merger and acquisition brokering business entity 200, an independent organization.

That is, in the merger and acquisition proposal generation system of the present invention, it is desirable that the operation of transferring business information indicating general business activities of each candidate enterprise 210, 220, and 230 via the communication network, for example via the Internet, to the ASP, and the operation of the merger and acquisition brokering business entity 200 generating a merger and acquisition proposal with respect to each candidate enterprise both be performed as processing by a computer.

In recent years, candidate enterprises have actively adopted the concept of outsourcing, and as a part of that concept have come to directly input business information, including information such as finances, accounting, marketing, and production planning information with regard to the candidate enterprise, to an application service provider.

In this environment, each candidate enterprise treats the ASP as part of its accounting department, and stores all necessary information at the ASP, so that the enterprise can download information required for internal or external use from the ASP, enabling required information and documents such as stock reports, tax and accounting reports and the like to be generated.

Important information about an enterprise is thus stored at the ASP, and in the present invention the ASP is effectively used to implement a system for generating a merger and acquisition proposal having improved feasibility.

Specifically, individual contracts are established between the merger and acquisition brokering business entity 200, the individual candidate enterprises 210, 220, and 230 desiring the generation of a merger and acquisition proposal, and an ASP 240, the candidate enterprises 210, 220, and 230 storing the above-noted business information with regard to their company at the ASP 240, and performs constant updating, deletion, and correction processing of this information, so as to maintain it as the latest business information, and allowing business information with regard to their companies to be read from the ASP at any time.

It is desirable that the ASP 240, within the limits of its storage capacity, store past business information as well for each candidate enterprise 210, 220, and 230.

Additionally, the candidate enterprises 210, 220, and 230 enter into a contract with the ASP 240, so that when the merger and acquisition brokering business entity 200 accesses the ASP 240 and makes a request for viewing or downloading of business information stored thereat, it is possible for the merger and acquisition brokering business entity to do so.

The ASP 240 is configured so as to generate a file of business information for each of the candidate enterprises 210, 220, and 230 desiring the generation of a merger and acquisition proposal, and store and manage these files and, based on priorly established contracts with these enterprises, provides business information with regard to candidate enterprises when requested to do so by the merger and acquisition brokering business entity 200.

The merger and acquisition brokering business entity 200 in the present invention, pursuant to the above-noted contract, reads from the ASP 240 the business information of each of the candidate enterprises 210, 220, and 230 desiring the generation of a merger and acquisition proposal, performs an analysis using this information, and generates a proposed merger and acquisition proposal, giving notification to each of the candidate enterprises of the results, either directly or via the Internet.

That is, because the present invention is configured so as to assure the merger and acquisition brokering business entity only can use the business information regarding each individual candidate enterprise stored at an ASP 240, without disclosing it publicly other than between candidate enterprises desiring the generation of a merger and acquisition proposal, in performing the various above-noted information transmittal operations, in order to prevent unauthorized access or improper leakage of business information, of course, it is necessary to use a strict security system, including identification codes and ID numbers for each candidate enterprise, and an encoding means or the like.

In Fig. 1, the reference numeral 290 denotes a billing system for managing the payment of expenses incurred with regard to this system, in the case in which the Internet 300 is used as the network 250.

More specifically with regard to the merger and acquisition proposal generation system 1 of the present invention, in the merger and acquisition proposal generation system 1 activity information of a target enterprise 210 is stored at an ASP server 240, which either is operated by the merger and acquisition brokering business entity 200 or is operated independently from the merger and acquisition brokering business entity 200.

The merger and acquisition brokering business entity 200 shown in Fig. 1 has a function of requesting general business activity information stored at the ASP server 240 with regard to the candidate enterprise A, the candidate enterprise B, and the candidate enterprise C.

The merger and acquisition brokering business entity 200 also has a function of receiving the general business activity information of the candidate enterprise A, the candidate enterprise B, and the candidate enterprise C sent from the ASP server 240.

The candidate enterprise A 210 has a function of sending, via a terminal of the candidate enterprise A, its own general business activity information such as financial, accounting, marketing, and manufacturing information to the ASP server 240.

The candidate enterprise A 210 further has a function for sending its general business activity information such as financial, accounting, marketing, and manufacturing information to the ASP server 240.

The candidate enterprise A 210 further has a function of searching, deleting, and updating its general business activity information such as financial, accounting, marketing, and manufacturing information, which is stored on the ASP server 240.

The candidate enterprise B 220 further has a function for sending its general business activity information such as financial, accounting, marketing, and manufacturing information to the ASP server 240.

The candidate enterprise B 220 further has a function of searching, deleting, and updating its general business activity information such as financial, accounting, marketing, and manufacturing information, which is stored on the ASP server 240.

The candidate enterprise C 230 further has a function for sending its general business activity information such as financial, accounting, marketing, and manufacturing information to the ASP server 240.

The candidate enterprise C 230 further has a function of searching, deleting, and updating its general business activity information such as financial, accounting, marketing, and manufacturing information, which is stored on the ASP server 240.

The ASP server 240 has a function of recording general business information such as financial, accounting, marketing, and manufacturing information sent by the candidate enterprise A 210.

The ASP server 240 further has a function of searching, deleting, and updating general business activity information such as financial, accounting, marketing, and manufacturing information of the candidate enterprise A 210 already recorded thereon.

The ASP server 240 further has a function of recording general business activity information such as financial, accounting, marketing, and manufacturing information sent by the candidate enterprise B 220.

The ASP server 240 further has a function of searching, deleting, and updating general business activity information such as financial, accounting, marketing, and manufacturing information of the candidate enterprise B 220 already recorded thereon.

The ASP server 240 further has a function of recording general business activity information such as financial, accounting, marketing, and manufacturing information sent by the candidate enterprise C 230.

The ASP server 240 further has a function of searching, deleting, and updating general business activity information such as financial, accounting, marketing, and manufacturing information of the candidate enterprise C 230 already recorded thereon.

The ASP server 240 further has a function of, in response to an inquiry from the merger and acquisition brokering business entity 200, providing general business activity information such as financial, accounting, marketing, and manufacturing information with regard to the candidate enterprise C.

A merger and acquisition proposal generation method according to the present invention basically has a step of a candidate enterprise storing activity information on an ASP server, and a step of a merger and acquisition brokering business entity obtaining activity information as reference information from the ASP server for generation of a merger and acquisition proposal and generating an actual merger and acquisition proposal.

Specifically, a method for generating a merger and acquisition proposal according to the present invention is a merger and acquisition proposal generation method wherein a merger and acquisition brokering business entity 200 in the business of providing a merger and acquisition proposal to candidate enterprises 210, 220, and 230, one or a plurality of candidate enterprises having a prescribed contractual relationship with the merger and acquisition brokering business entity 200 and desiring the generation of a merger and acquisition proposal, and an application service provider 240 are electrically connected via a communication network 250, this method having
a step of each candidate enterprises 210, 220, and 230 minimally transmitting to the ASP 240 via the communication network and a terminal of the candidate enterprises 210, 220, and 230 at an appropriate interval business information indicating general business activities, such as financial, accounting, and tax information for their own enterprise, so as to maintain at all times the updated condition within the ASP of the latest business information with regard to each candidate enterprise,
a step of the candidate enterprises 210, 220, and 230 viewing or downloading from the ASP 240 via its own terminal the business information with regard to its own enterprise,
a step of the merger and acquisition brokering business entity 200 viewing or downloading via a terminal of the merger and acquisition brokering business entity 200 part or all the information stored at the ASP 240 with regard to candidate enterprises 210, 220, and 230 desiring the generation of a merger and acquisition proposal,
a step of the merger and acquisition brokering business entity 200 considering the viewed or download information of the candidate enterprises 210, 220, and 230, and generating a merger and acquisition proposal between a specific plurality of candidate enterprises 210, 220, and 230, and
a step of the merger and acquisition brokering business entity 200 notifying the candidate enterprises of the results of the generation.

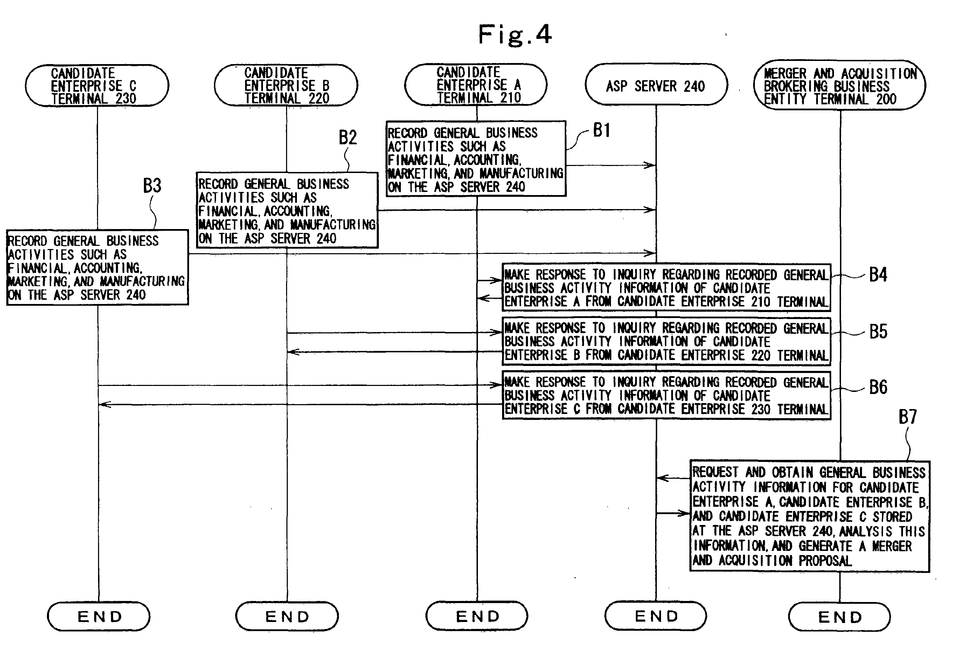

An embodiment of the operating procedure in the merger and acquisition proposal generation method according to the present invention is as follows, referring to Fig. 4.

Employees in each area in the candidate enterprise A 210, such as the financial area, the accounting area, the marketing area, and the manufacturing area and the like use terminals installed in those area to successively send general business information to the ASP server 240, via the network 250, so that the information is stored thereon. When this is done, the employee in each area performs the task of recording information as part of the EDP environment in his or her company, without being particularly aware of the location or operator of the ASP server (step B1).

In the same manner, employees in the various areas, such as the financial area, the accounting area, the marketing area, and the marketing area and the like of the candidate enterprise B 220 use terminals installed in those areas to successively send general business information to the ASP server 240, via the network 250, so that the information is stored thereon. When this is done, the employee in each area performs the task of recording information as part of the EDP environment in his or her company, without being particularly aware of the location or operator of the ASP server (step B2).

Similarly, employees in the various areas, such as the financial area, the accounting area, the marketing area, and the marketing area and the like of the candidate enterprise C 230 use terminals installed in those areas to successively send general business information to the ASP server 240, via the network 250, so that the information is stored thereon. When this is done, the employee in each area performs the task of recording information as part of the EDP environment in his or her company, without being particularly aware of the location or operator of the ASP server (step B3).

The ASP server 240, in response to a request from a terminal of the candidate enterprise A 210 for searching, updating, or deletion, performs the requested operation, and responds with the results for the request (step B4).

The ASP server 240, in response to a request from a terminal of the candidate enterprise B 220 for searching, updating, or deletion, performs the requested operation, and responds with the results for the request (step B5).

The ASP server 240, in response to a request from a terminal of the candidate enterprise C 230 for searching, updating, or deletion, performs the requested operation, and responds with the results for the request (step B6).

An employee at the merger and acquisition brokering business entity 200, using a terminal of the merger and acquisition brokering business entity 200, requests general business activity information, such as financial, marketing, and sales information and the like of the candidate enterprise A 210, the candidate enterprise B 220, and the candidate enterprise C 230 stored on the ASP server 240, views this information, analyzes the information, and generates a merger and acquisition proposal (step B7).

As described above, in this aspect of an embodiment of the present invention, only a merger and acquisition brokering business can access various types of activity information of candidate enterprises stored at an ASP 240, without disclosing them, something that was not possible in the past, and use this as a reference for generating a merger and acquisition proposal, thereby providing a method for generating a merger and acquisition proposal with a high feasibility.

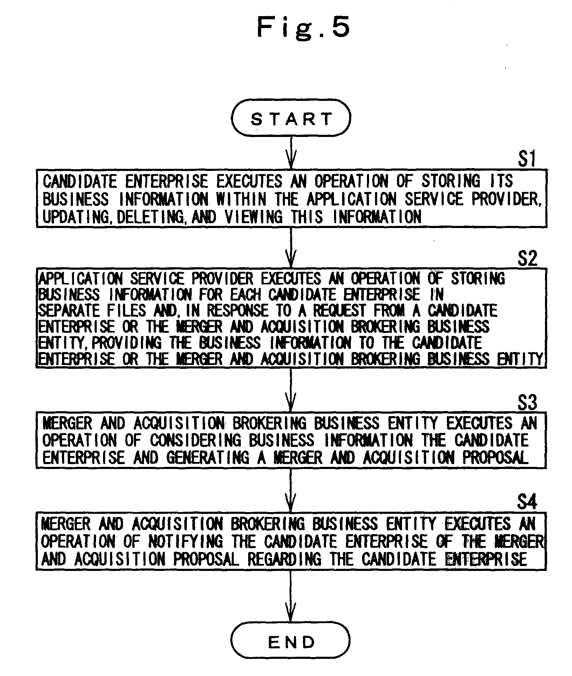

Another embodiment of a merger and acquisition proposal generation method according to the present invention, as shown in the flowchart of Fig. 5, is a merger and acquisition proposal generation method wherein a merger and acquisition brokering business entity 200 in the business of providing a merger and acquisition proposal to a candidate enterprise, one or a plurality of candidate enterprises 210, 220, and 230 having a prescribed contractual relationship with the merger and acquisition brokering business entity 200 and desiring the generation of a merger and acquisition proposal, and an application service provider (ASP) 240 are electrically connected via a communication network 250, this method having
a first step of the candidate enterprises 210, 220, and 230 desiring the generation of a merger and acquisition proposal minimally transmitting to the ASP 240, via their own terminals, business information indicating general business activities, such as financial, accounting, and tax information, and storing and updating or deleting this information at the ASP 240 (step S1),
a second step of the ASP 240 separately storing into individual files for each candidate enterprise the business information sent by each of the candidate enterprises 210, 220, and 230, and, when there is a request from either the candidate enterprises 210, 220, and 230 or from the merger and acquisition brokering business entity 200, providing business information regarding a prescribed candidate enterprise 210, 220, or 230 to a prescribed candidate enterprise 210, 220, or 230 or to the merger and acquisition brokering business entity 200 (step S2),
a third step of the merger and acquisition brokering business entity 200 accessing the ASP 240, considering business information regarding a prescribed candidate enterprise 210, 220, or 230, which it views or downloads from the ASP 240, and generating a merger and acquisition proposal with regard to the prescribed candidate enterprises of the candidate enterprises 210, 220, and 230 (step S3),
and a fourth step of the merger and acquisition brokering business entity 200 notifying the candidate enterprises 210, 220, and 230 of the merger and acquisition proposal with regard to the candidate enterprises 210, 220, and 230 (step S4),
each of the above-noted steps being controlled by a computer.

Another aspect of an embodiment of the present invention is a recording medium onto which has been recorded a program for execution by a computer of a merger and acquisition proposal generation method, wherein a merger and acquisition brokering business entity in the business of performing ranking of enterprises, one or a plurality of candidate enterprises having a prescribed contractual relationship with the merger and acquisition brokering business entity and desiring the generation of a merger and acquisition proposal, and an application service provider (ASP) are mutually electrically connected via a communication network, this method having
a first step of each candidate enterprise minimally transferring business information indicating general business activities such as financial, accounting, and tax information, via a terminal of the candidate enterprises, to the ASP at an appropriate interval, and maintaining the business information indicating the latest business activities of each of the candidate enterprises current at all times by updating the information at the ASP,
a second step of the candidate enterprises viewing or downloading via their own terminals their own business information from the ASP at any time,
a third step of the merger and acquisition brokering business entity accessing the ASP and viewing or downloading, via a terminal of the merger and acquisition brokering business entity, all or part of the information with regard to a candidate enterprise desiring the generation of a merger and acquisition proposal that is stored at the ASP,
a fourth step of the merger and acquisition brokering business entity using the viewed or downloaded information regarding the candidate enterprise and generating a merger and acquisition proposal with respect to the candidate enterprise, and
a fifth step of the merger and acquisition brokering business entity disclosing the results of a ranking of the enterprise.

By adopting the technical constitution described in detail above, a merger and acquisition proposal generation system and method according to the present invention achieve a number of effects.

The first effect is that, of enabling the achievement by the merger and acquisition brokering business entity of an optimum merger and acquisition proposal by the merger and acquisition brokering business entity by combining diverse candidate enterprises. The reason for this is that, unlike the past, it is possible with the present invention for the merger and acquisition brokering business entity to obtain various activities information for a candidate enterprise stored at an ASP, and reference this information in the generation of a merger and acquisition proposal, without publicly disclosing the information.

The second effect achieved is that of enabling a merger and acquisition proposal from a combination of candidate enterprise from a large number of candidate enterprises in a short period of time. The reason for this is that, unlike the past, it is possible with the present invention for the merger and acquisition brokering business entity to perform an objective and wide-ranging study of various business activity information of candidate enterprises stored at an ASP as a third party, and to make use of this information as a reference in generating a merger and acquisition proposal through repeated trial and error, dealing with a large amount of information quickly in an EDP environment.

The third effect achieved by the present invention is that of improving the evaluation of a candidate enterprise's shares and other instruments in the market. The reason for this is that a candidate enterprise that is able to provide the merger and acquisition brokering business entity with business activity information is evaluated as being honest and open, and as having accounting reports that have high credibility.

## Claims

1. A merger and acquisition proposal generation system, wherein a merger and acquisition brokering business entity, one or a plurality of candidate enterprises having a prescribed contractual relationship with said merger and acquisition brokering business entity and desiring generation of a merger and acquisition proposal, and an application service provider are mutually connected via an appropriate communication network, and wherein said system is configured so that business information indicating general business activities, including at least financial, accounting, and tax information for each said candidate enterprise is stored at said ASP separately for each said candidate enterprise, and said merger and acquisition brokering business entity having a function whereby said merger and acquisition brokering business entity obtains required information with regard to said candidate enterprise in said contractual relationship desiring said generation of a merger and acquisition proposal from said ASP and generates said merger and acquisition proposal for each said candidate enterprise.

2. A merger and acquisition proposal generation system according to claim 1, wherein an operation of each candidate enterprise for storing business information indicating general business activities thereof at said ASP and an operation of said merger and acquisition brokering business entity generating said merger and acquisition proposal with respect to said candidate enterprises are performed as processing by a computer.

3. A merger and acquisition proposal generation system according to claim 1 or 2, wherein said communication network is the Internet.

4. A merger and acquisition proposal generation system according to claim 1, 2 or 3, wherein said ASP is under the control of said merger and acquisition brokering business entity.

5. A method for generating a merger and acquisition proposal, wherein a merger and acquisition brokering business entity which business is to make and provide a merger and acquisition proposal to candidate enterprises, one or a plurality of candidate enterprises having a prescribed contractual relationship with said merger and acquisition brokering business entity and desiring generation of a merger and acquisition proposal, and an application service provider are mutually connected via an appropriate communication network, said method comprising:
a step of each said candidate enterprise minimally transferring to said application service provider at an appropriate interval, business information indicating general business activities, including financial, accounting, and tax information of said candidate enterprise via a terminal thereof, so that a condition in which the latest business information indicating general business activities of said candidate enterprise, is at all time updated and stored within said application service provider for each said candidate enterprise, is maintained;
a step of said candidate enterprises viewing or downloading business information thereof from said application service provider via a terminal of said candidate enterprise at any time;
a step of said merger and acquisition brokering business entity accessing said application service provider and viewing or downloading via a terminal of said merger and acquisition brokering business entity all or part of said information stored at said application service provider regarding a candidate enterprise desiring said generation of a merger and acquisition proposal;
a step of said merger and acquisition brokering business entity considering said information viewed or downloaded regarding said candidate enterprise and generating a proposal for a merger and acquisition between a plurality of specific said candidate enterprises; and
a step of said merger and acquisition brokering business entity notifying said candidate enterprises of said generated merger and acquisition proposal.

6. A merger and acquisition proposal generation system according to claim 1, wherein said ASP is under the control of said merger and acquisition brokering business entity.

7. A merger and acquisition proposal generation system according to claim 1, wherein said communication network is the Internet.

8. A merger and acquisition proposal generation method wherein a merger and acquisition brokering business entity in a business of providing a merger and acquisition proposal to a candidate enterprise, one or a plurality of candidate enterprises having a prescribed contractual relationship with said merger and acquisition brokering business entity and desiring generation of said merger and acquisition proposal, and an application service provider are mutually electrically connected via a communication network, said method comprising:
a first step of said candidate enterprises desiring said generation of a merger and acquisition proposal minimally transmitting to said application service provider, via a terminal thereof, business information indicating general business activities, such as financial, accounting, and tax information, and storing , updating, deleting, or reviewing said information at said application service provider;
a second step of said application service provider separately storing into individual files for each said candidate enterprise said business information sent by each of said candidate enterprises and, when there is a request from either said candidate enterprises or from said merger and acquisition brokering business entity, providing said business information regarding a prescribed said candidate enterprise to a prescribed said candidate enterprise or to merger and acquisition brokering business entity;
a third step of said merger and acquisition brokering business entity accessing said application service provider, considering said business information regarding a prescribed said candidate enterprise, which it views or downloads from said application service provider, and generating said merger and acquisition proposal with regard to said prescribed candidate enterprises of said candidate enterprises; and
a fourth step of said merger and acquisition brokering business entity notifying said candidate enterprises of said merger and acquisition proposal with regard to said candidate enterprises,
wherein each of said steps is controlled by a computer.

9. A recording medium onto which has been recorded a program for execution by a computer of a merger and acquisition proposal generation method, wherein a merger and acquisition brokering business entity in a business of performing ranking of enterprises, one or a plurality of candidate enterprises having a prescribed contractual relationship with said merger and acquisition brokering business entity and desiring generation of a merger and acquisition proposal, and an application service provider are mutually electrically connected via a communication network, said method comprising:
a first step of each said candidate enterprise minimally transferring business information indicating general business activities such as financial, accounting, and tax information, via a terminal of said candidate enterprises, to said application service provider at an appropriate interval, and maintaining said business information so as to indicate the latest business activities of each of said candidate enterprises at all times by updating said information at said application service provider;
a second step of said candidate enterprises viewing or downloading via their own terminals their own business information from said application service provider at any time;
a third step of said merger and acquisition brokering business entity accessing said application service provider and viewing or downloading, via a terminal of said merger and acquisition brokering business entity, all or part of said information with regard to said candidate enterprise desiring said generation of a merger and acquisition proposal that is stored at said application service provider;
a fourth step of said merger and acquisition brokering business entity using said viewed or downloaded information regarding said candidate enterprise, and analyzing and evaluating said information so as to generate a merger and acquisition proposal with respect to said candidate enterprise, and
a fifth step of said merger and acquisition brokering business entity disclosing results of a ranking of said enterprise.
